(19) Europäisches Patentamt
European Patent Office
Office européen des brevets

(11) **EP 2 950 228 A1**

(12) **EUROPEAN PATENT APPLICATION**

(43) Date of publication:
**02.12.2015 Bulletin 2015/49**

(51) Int Cl.:
***G06F 21/55*** *(2013.01)*   ***H04L 29/06*** *(2006.01)*

(21) Application number: **15168361.2**

(22) Date of filing: **20.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.05.2014 JP 2014109914**

(71) Applicant: **FUJITSU LIMITED**
**Kawasaki-shi,**
**Kanagawa 211-8588 (JP)**

(72) Inventors:
• **Honda, Satomi**
**Kanagawa, 211-8588 (JP)**
• **Torii, Satoru**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **AUTHENTICATION INFORMATION THEFT DETECTION METHOD, AUTHENTICATION INFORMATION THEFT DETECTION DEVICE, AND PROGRAM FOR THE SAME**

(57) The method is for detecting theft of authentication information for a communication device that provides a service for a user. The method includes storing, for each log-in request, a record of information on a log-in request source, authentication information that the log-in request source submits to the communication device when the log-in is performed, and information indicating a success or failure of the log-in using the authentication information; receiving information on an attack source against the communication device, from a management device of a network in which the communication device exists; determining that authentication information in the record is stolen by the attack source when information that indicates success of the log-in is stored in the record, the record including information on the log-in request source which is matched with the information on the attack source; and outputting the authentication information that is determined to be stolen.

FIG. 2

**Description**

FIELD

The embodiments discussed herein are related to an authentication information theft detection method, an authentication information theft detection device, and a program for the same.

BACKGROUND

In the related art, a communication device, such as a server, that is connected to a network that is administered by a network administrator (NW administrator) has been lent to a user, hereinafter referred to as a network user or NW user. The NW user provides a certain service, such as Web service, email service, cloud service, or the like, for an end user, using the lent communication device.

Typically, as the communication device, there is "rental server" that is a server on a network that is managed by a network service provider (NSP) as a NW administrator, which is lent to NW users that correspond to various organizations such as a company and a school, or individuals. The NW user manages a Web site (Web service), an email service, and the like, using the lent server. The end user may be a member of each of the organizations, or an individual who does not have such restriction.

When each of the end users utilizes the service, each of the users logs into a system of the NW user, using authentication information that has been registered in advance (typically, an end user name and a password). The log-in record (access log) of the end user is recorded, for example, to the server that provides the service. The access log is administered by each of the NW users, so that the NW administrator is not allowed to access the access log.

Recently, an incident occurs that the authentication information of the end user is stolen though a cyber attack, and the attacker masquerades as the end user to gain unauthorized entry into the system. Therefore, there is a demand from the NW user to find out whether or not the authentication information (especially, end user name) has been stolen, in point of view of end user protection.

Japanese Laid-open Patent Publication Nos. 2008-227931, 2004-220373, 2010-239392, 2005-234729, 2005-332152, and 2012-212354 are examples of the related art.

However, it has been difficult for the NW user to determine theft of the authentication information from the content of the access log to the service. The reason is as follows. In a typical access log, an IP address (transmission source IP address) of a log-in request source (end user), an end user name and a password that have been used for the log-in, and success or failure of the log-in are recorded as a single record.

When an end user name and a password are stolen, an information element in the record, which is used to determine whether or not the log-in is unauthorized, is an IP address. However, an IP address of the end user is generally lent by a Dynamic Host Configuration Protocol (DHCP) server, so that the IP address is not fixed. In addition, the IP address of the log-in request source varies in the case where the end user uses a plurality of terminals, changes the location at which the end user tries the log-in, or the like. Thus, even if a certain record in the access log is a record of unauthorized log-in using the stolen end user name and password, it has been difficult for the NW user to determine whether or not the log-in is unauthorized log-in, from an IP address of the corresponding record.

SUMMARY

Accordingly, it is an object in one aspect of the invention to provide a technique by which theft of authentication information may be detected using an access log by taking a clue from information on a log-in request source.

According to an aspect of the invention, an authentication information theft detection method performed by an information processing device which detects theft of authentication information that is used for log-in by a user, for a communication device that provides a certain service for the user when the log-in is performed successfully, the authentication information theft detection method includes, causing the information processing device to store, for each log-in request, a record that includes information on a log-in request source, authentication information that the log-in request source submits to the communication device when the log-in is performed, and information that indicates a success or failure of the log-in using the authentication information; causing the information processing device to receive information on an attack source against the communication device, from a management device of a network in which the communication device exists; causing the information processing device to determine that authentication information in the record is stolen by the attack source when information that indicates success of the log-in is stored in the record, the record including information on the log-in request source which is matched with the information on the attack source; and causing the information processing device to output the authentication information that is determined to be stolen.

BRIEF DESCRIPTION OF DRAWINGS

FIG. 1 is a diagram illustrating an example of a network system to which an authentication information theft detection method according to an embodiment is applied;

FIG. 2 is a diagram illustrating the authentication information theft detection method;

FIG. 3 is a diagram illustrating a configuration example of an information processing device (computer) that may be applied to a server and a management device;

FIG. 4 is a diagram schematically illustrating functional configurations of an intrusion detection system (IDS) device, an IDS log analysis device, and an access log verification device;

FIG. 5 is a diagram illustrating a data structure example of the IDS log DB;

FIG. 6 is a diagram illustrating processing in an attacked destination group analysis unit;

FIG. 7 is a diagram illustrating a data structure example of an access log DB;

FIG. 8 is a flowchart illustrating an operation example of an access log verification unit;

FIG. 9 is a diagram illustrating processing of the access log verification unit;

FIG. 10 is a diagram illustrating a data structure example of a stolen user name list; and

FIG. 11 is a diagram illustrating an example of a display screen that is output by an interface unit.

DESCRIPTION OF EMBODIMENTS

Embodiments are described below with reference to drawings. Configurations of the embodiments are examples, and the disclosure discussed herein is not limited to such configurations.

<System configuration example>

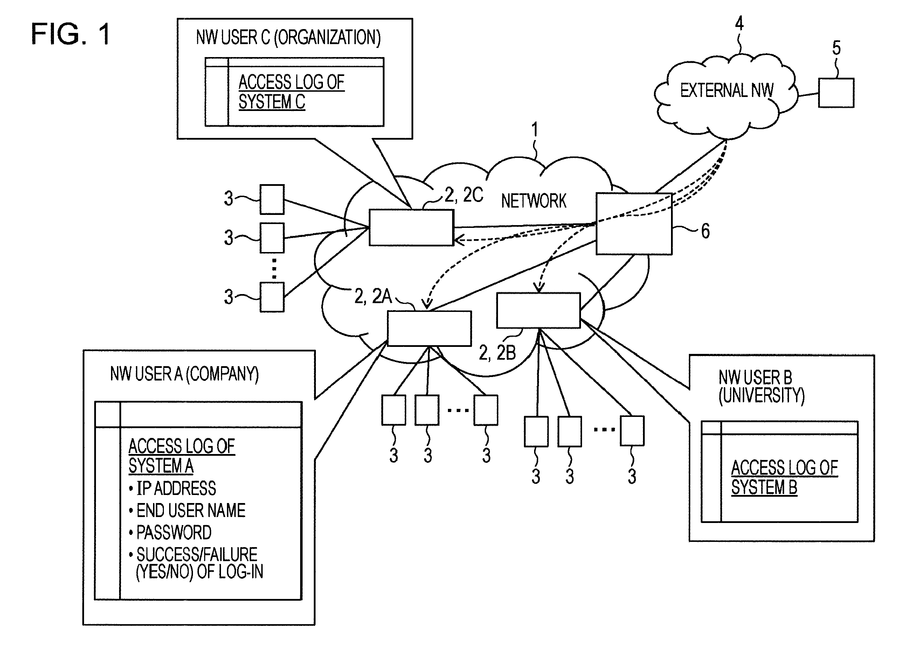

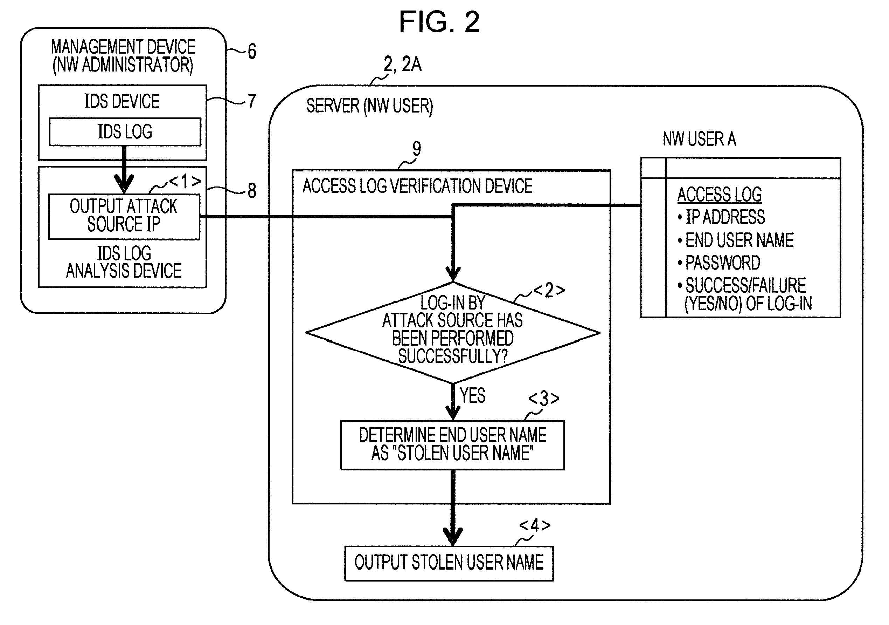

FIG. 1 is a diagram illustrating an example of a network system to which a network management method (authentication information theft detection method) according to an embodiment is applied. FIG. 2 is a diagram illustrating the authentication information theft detection method.

In FIG. 1, a network 1 is a network that is administered by a network administrator (NW administrator). The network 1 is, for example, an Internet Protocol (IP) network in which a communication device performs transmission and reception of data using an IP packet, hereinafter, simply referred to as "packet". For example, the network 1 is a provider network that is administered by a network service provider (NSP). However, the NW administrator is not limited to the NSP.

To the network 1, a plurality of communication devices are connected. In FIG. 1, as examples of the plurality of communication devices, server devices 2A, 2B, and 2C exist in the network 1, hereinafter the server devices simply referred to as "servers". In the following description, the servers 2A, 2B, and 2C are referred to as a server 2 when the servers 2A, 2B, and 2C are not distinguished from each other.

Each of the servers 2A, 2B, and 2C is lent to a network user (NW user) from the NW administrator. For example, the server 2A is lent to a NW user A that is a company, the server 2B is lent to a NW user B that is a university, and the server 2C is lent to a NW user C that is a certain organization. However, the NW user may be any one of a company, a school, an organization other than a company and a school, and an individual.

Each of the NW users A, B, and C provides a network service for the end user, using the lent server 2. The servers 2A, 2B, and 2C respectively operate as service provision systems of the NW users A, B, and C. For example, the servers 2A, 2B, and 2C respectively operate as Web service provision systems that provide Web sites that are managed by the NW users A, B, and C. The end user is an example of "user".

The service provision system related to the Web site that is managed by the server 2A, hereinafter referred to as "system A", is utilized by a plurality of end users that are members of the company, where the number of the plurality of end users is "n", a positive integer. Each of the end users of the system A accesses the server 2A (system A), using a terminal 3 that is used by the end user, and may receive various pieces of information such as a text, an image, sound, and a video, provided through browsing of the Web site.

The service provision system related to the Web site that is managed by the server 2B, hereinafter referred to as "system B", is utilized by a plurality of end users that are students and staffs of the university, where the number of the end users is "n", a positive integer, for example. Each of the end users of the system B accesses the server 2B (system B), using the terminal 3 that is used by the end user, and may browse the Web site.

The service provision system related to the Web site that is managed by the server 2C, hereinafter referred to as "system C", is utilized by a plurality of end users that are members of the organization, where the number of the end users is "n", a positive integer, for example. Each of the end users of the system C accesses the server 2C (system C), using the terminal 3 that is used by the end user, and may browse the Web site.

The network service that is provided by the NW user includes various services such as an email and a cloud in addition to a Web site, and the content of a service to be provided is not limited. However, each of the end users logs into the system, using authentication information that has been registered in advance (end user name and password in the embodiment), in usage of the service.

Each of the servers 2A, 2B, and 2C that operate as the service provision systems stores, as an access log, a record that the end user has tried to log into the system using the terminal 3. That is, the server 2A stores an access log to the system A, and the server 2B stores an access log to the system B, and the server 2C stores an access log to the system C. Each of the access logs stores one or more records each of which includes at least an IP address of an access person (log-in request source), authentication information (end user name and password), and information that indicates success or failure of the log-in. The end user name is an example of "user identifier" or "user ID".

The network 1 is connected to an external network (external NW) 4. The external network 4 is, for example, an IP network that is represented by the Internet (public network) and an intranet. The terminal 3 that is connected to the network 1 may communicate with a terminal that is connected to the external network 4, by transmission and reception of a packet.

There is a possibility that each of the servers 2A, 2B, and 2C receives a cyber attack (indicated by a broken line in FIG. 1) using a packet, from a terminal 5 of an attacker, which is connected to the external network 4. Therefore, the NW administrator provides a network management device 6 between the network 1 and the external network 4, the network management device is hereinafter referred to as a management device. The management device 6 is installed on a path of a packet that enters the network 1 from the external network 4.

The management device 6 includes a security device that is called an intrusion detection system (IDS) device 7 to monitor a cyber attack, see FIG. 2. The IDS device 7 determines whether or not a plurality of packets that enters the network 1 from the external network 4 indicates a pattern of a specific event such as server attack.

When the plurality of packets indicates the pattern of the specific event, the IDS device 7 performs the recording to a log (IDS log). The IDS device 7 determines whether or not the packets indicate the pattern of the specific event such as server attack, based on whether or not the packets are matched with the pattern of the specific event, which has been registered in advance, or based on comparison with a pattern in the past.

The management device 6 further includes an IDS log analysis device 8, hereinafter referred to as the analysis device 8, that analyzes a log that has been output from the IDS device 7, see FIG. 2. The analysis device 8 analyzes an IDS log that has been output from the IDS device, and performs output of an IP address that has accessed the server 2 for the purpose of an attack, hereinafter may be referred to as "attack source IP", (<1> in FIG. 2). The output attack source IP is transmitted to the server 2 that is the attack target.

Each of the servers 2 (the servers 2A, 2B, and 2C, and the server 2A is illustrated in FIG. 2) includes an access log verification device 9, hereinafter referred to as the verification device 9, see FIG. 2. When the verification device 9 receives the attack source IP from the analysis device 8 of the management device 6, the verification device 9 determines whether or not log-in by the attack source IP has been performed successfully, with reference to the access log, (<2> in FIG. 2).

That is, the verification device 9 determines whether or not the IP address of the log-in request source is the attack source IP, that is, whether or not the log-in request source information is matched with the attack source information, and whether or not a record that includes information on success of the log-in is stored in the access log. When the corresponding record is found from the access log (YES in <2> in FIG. 2), the verification device 9 executes the following processing. That is, the verification device 9 determines that an end user name in the record is a "stolen user name" (<3> in FIG. 2). Here, the "stolen user name" indicates an end user name that has been stolen by the attacker.

The verification device 9 performs output of the stolen user name (<4> in FIG. 2). The stolen user name is registered, for example, to a list. The NW user A who has known the stolen user name with reference to the list may change the setting of the system A so that log-in with the stolen user name is rejected. In addition, the NW user A may request the end user to change the stolen end user name for a new end user name. At that time, the NW user A may also request the end user to change the stolen password for a new password.

<Configuration example of Information processing device>

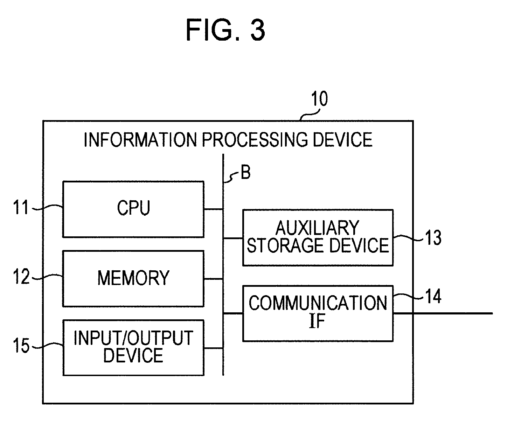

FIG. 3 is a diagram illustrating a configuration example of an information processing device, such as a computer, that may be applied to each of the server 2 and the management device 6. In FIG. 3, an information processing device 10 includes a central processing unit (CPU) 11, a memory (main memory) 12, an auxiliary storage device 13, a communication interface (communication IF) 14, and an input/output device 15 that are connected to each other through a bus B. The CPU 11 is an example of "processor" or "control device".

The memory 12 includes a non-volatile storage medium and a volatile storage medium. The non-volatile storage medium is, for example, is a read only memory (ROM), and the volatile storage medium is, for example, a random access memory (RAM). The memory 12 is used as a work area of the CPU 11.

The auxiliary storage device 13 is, for example, at least one of a hard disk drive, a solid state drive (SSD), an electrically erasable programmable ROM (EEPROM), and a flash memory. The auxiliary storage device 13 stores a program that is executed by the CPU 11, and data that is used when the program is executed. Each of the memory 12 and the auxiliary storage device 13 is an example of "storage device" or "storage medium".

The communication IF 14 is a device that performs protocol conversion and signal conversion related to the communication. As the communication IF 14, for example, a communication interface device such as a network interface card (NIC) or a network card is applied. The communication IF 14 is an example of "transmission device" and "reception device".

The input/output device 15 includes an input device and an output device. The input device includes at least one of a key, a button, a pointing device such as a mouse, and a touch-screen, and is used for input of information. The output device is, for example, a display device, and is used for display of information. The input/output device 15 may include an audio input device such as a microphone, and an audio output device such as a speaker.

The CPU 11 executes a program that is stored in the auxiliary storage device 13 by loading the program into the memory 12. Therefore, the information processing device 10 may operate as the management device 6, and also operate as the server 2.

<Functional configuration>

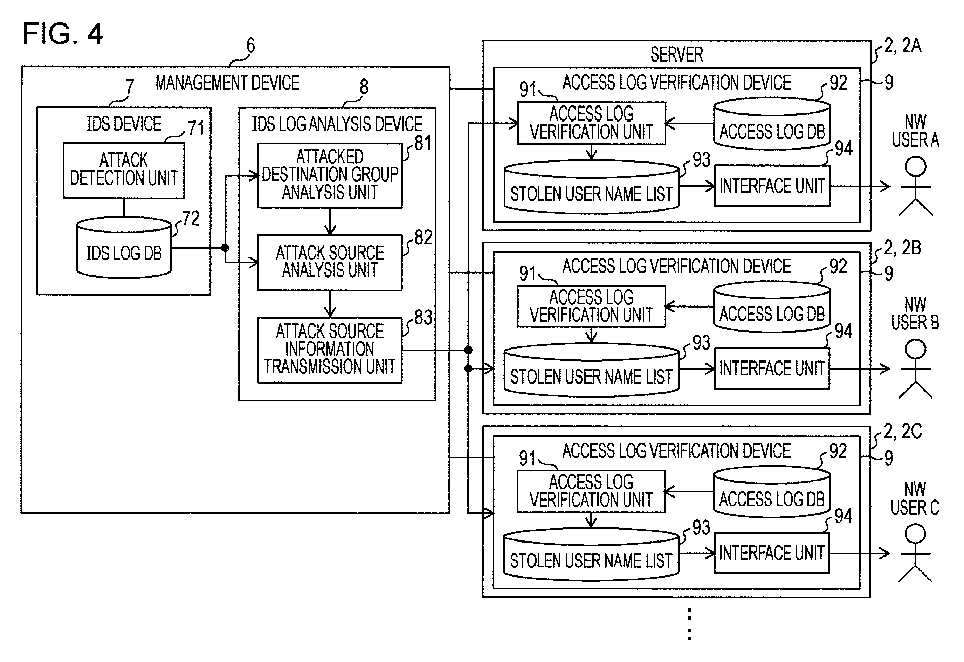

FIG. 4 is a diagram schematically illustrating functional configurations of the IDS device 7 and the IDS log analysis device 8, which are provided in the management device 6, and the verification device 9 that is provided in the server 2 (each of the servers 2A, 2B, and 2C).

<<Management device>>

The IDS device 7 includes an attack detection unit 71 and an IDS log database (IDS log DB) 72. The analysis device 8 includes an attacked destination group analysis unit 81, an attack source analysis unit 82, and an attack source information transmission unit 83.

The CPU 11 of the information processing device 10 that operates as the management device 6 operates as the attack detection unit 71, the attacked destination group analysis unit 81, the attack source analysis unit 82, and the attack source information transmission unit 83 by executing programs. The IDS log DB 72 is stored in the auxiliary storage device 13 or the memory 12 of the information processing device 10 that operates as the management device 6.

[IDS device]

The IDS device 7 is a device that manages an intrusion detection system (IDS) that is used to monitor a cyber attack. The IDS device 7 detects, for example, a brute force attack from the attack source. Here, the brute force attack is an attack in which decoding of a cipher text is tried by listing up all conceivable keys. There also exists a dictionary attack in which search is performed using words that are collected in a dictionary as candidates, and an attack using a value that is initially set to the system, in order to perform efficient attack. The brute force attack includes an attack in which a large amount of identifiers (ID) and passwords that are considered to have been leaked from a certain system are used to log into another system.

The IDS device 7 is used for a counter-measure to detect a brute force attack and mainly monitor an access to a communication device having a certain IP address. The IDS device 7 includes a function to identify an IP address of an attack source. The management device 6 may perform protection such as blocking of the communication from the attack source IP that has been identified by the IDS device 7.

The attack detection unit 71 of the IDS device 7 detects a packet that is related to the brute force attack, from among packets that flow from the external network 4 to the network 1, and issues an event to inform an abnormality, to the analysis device 8. The attack detection unit 71 stores information on the detected packet that is related to the brute force attack, in the IDS log DB 72.

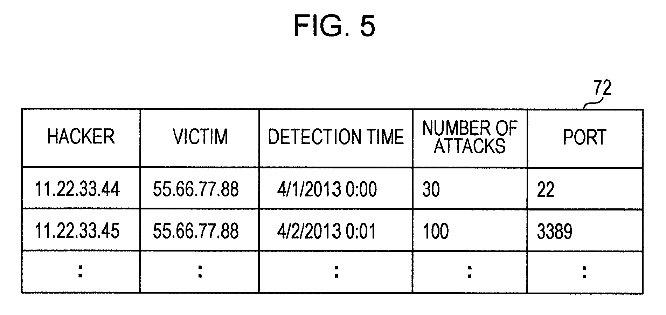

FIG. 5 is a diagram illustrating a data structure example of the IDS log DB 72. In FIG. 5, the IDS log DB 72 includes a table that is constituted by one or more records. A single record includes items of "Hacker", "Victim", "detection time point", " number of attacks", and "Port (port number)", as information elements.

"Hacker" indicates "attack source". The attack source indicates a communication device that is the source of communication, which tries an attack (brute force attack in the embodiment) against the system that is provided using the server 2. In the embodiment, the attack source is identified by an IP address of the source.

"Victim" indicates "attacked destination". The attacked destination indicates a communication device that receives the brute force attack. In the embodiment, the attacked destination is identified by an IP address that has been assigned to the attacked communication device (server 2).

Here, "detection time point" indicates a time point at which the IDS detects the brute force attack. "Number of attacks" indicates the number of log-in trials by the attack source. The number of attacks is also referred to as "number of log-in trials". The number of attacks may be the number of detections of the brute force attack in which log-in to the attacked destination has been tried from the attack source, in a certain continuous time period that includes a certain detection time point. This is because, in the brute force attack, log-in is repeatedly tried using end user names and passwords by guesswork in order to steel an unknown end user name and password.

For example, when a certain attacked destination receives an attack from an attack source over five minutes from a certain time point, the total number of attacks in the five minutes may be considered as "number of attacks". The number of attacks may be the number of detections of the brute force attack in a unit of a time. Alternatively, the number of attacks may be an average of the number of attacks in a unit of a time (for example, one minute), in a certain time period (for example, five minutes).

"Port" is a port number of the communication device (server 2) that is the attacked destination in which the attack is detected. The attack detection unit 71 refers to a transmission source IP address and a destination IP address of packets that flows from the external network 4 to the network 1, and writes a record to the IDS log DB 72, for example, when a transmission pattern of packets from a certain transmission source to a certain destination is matched with a pattern of the brute force attack.

As understood from the content of records illustrated in FIG. 5, for example, the first (upper side) record of the table illustrated in FIG. 5 indicates the following example. That is, the brute force attack occurs from an attack source having an IP address "11.22.33.44" to a port number "22" of an attacked destination having an IP address "55.66.77.88". The detection time point of the brute force attack is "0:00, April 1, 2013", and the number of attacks is 30 times.

[Analysis device]

Returning to FIG. 4, the attacked destination group analysis unit (analysis unit) 81 of the analysis device 8 identifies an IP address of a communication device that is considered to be an attacked destination of the brute force attack, based on the data (IDS log in FIG. 5) that is stored in the IDS log DB 72. In the embodiment, an IP address of the server 2 that has received the attack is identified as the IP address of the attacked destination.

For example, the attacked destination group analysis unit 81 may start analysis by obtaining an IDS log periodically. Alternatively, the attacked destination group analysis unit 81 may start analysis using reception of an event that has been issued from the IDS device 7, as a trigger.

For example, the attacked destination group analysis unit 81 calculates a correlation coefficient of the number of attacks and the detection time point for a plurality of attacked destinations (Victims), based on the data (IDS log) that is stored in the IDS log DB 72.

As a calculation method of a correlation coefficient related to the number of attacks and the detection time point, for example, a maximum clique method may be used. In addition, communication devices (Victims) having high correlation coefficients are selected, and identified as an attacked destination group (Victim group or communication device group). In the storage area (storage area of the auxiliary storage device 13 or the memory 12) to which the attacked destination group analysis unit 81 refers, an analysis setting DB (not illustrated) is stored. In the analysis setting DB, at least a threshold of the correlation coefficient that is used to identify an attacked destination group, and a time period (analysis interval) of IDS log data that has been used for the analysis are included. The attacked destination group analysis unit 81 obtains data that is matched with the analysis interval, from the IDS log, and selects (identifies) an attacked destination for which the calculation result of the correlation coefficient exceeds the threshold.

For example, a correlation coefficient R may be defined, as the following expression, where "$x_i$" represents the number of brute force attacks that are received at a communication device $v_i$, and "$t_i$" represents the detection time point at which the brute force attacks have been detected.

$$R = \frac{\sum_{i=1}^{n}(x_i - x_{av})(t_i - t_{av})}{\sqrt{\sum_{i=1}^{n}(x_i - x_{av})}\sqrt{\sum_{i=1}^{n}(t_i - t_{av})}}$$

Here, "$x_{av}$" represents an average of the number of brute force attacks $x_i$ and, "$t_{av}$" is an average of the detection time points $t_i$ at which the brute force attacks $x_i$ has been detected. The number of brute force attacks may be the number of attacks per minute.

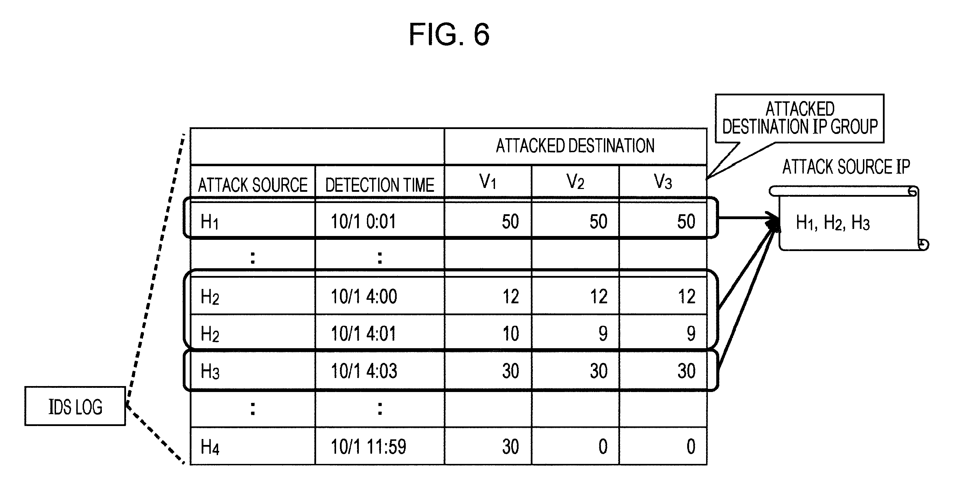

FIG. 6 is a diagram illustrating processing in the attacked destination group analysis unit 81. The brute force attack may be performed from a certain attack source to a plurality of attacked destinations (attacked destination group). In addition, the brute force attack may be performed to a plurality of certain attacked destinations (attacked destination group) from a different attack source depending on a detection time point. For example, at a certain time point $t_1$, the brute force attack may be tried from an attack source $H_1$ to attacked destinations $V_1$, $V_2$, ..., and $V_m$ (here, "m" is a positive integer), and at a time point $t_2$, the brute force attack may be tried from an attack source $H_2$ to the attacked destinations $V_1$, $V_2$, ..., and $V_m$.

As described above, when the brute force attack is tried to an attacked destination group, a history is left in the IDS log, in which an attack has been performed from a certain single attack source to a plurality of attacked destinations by approximately the same number of times, at approximately the same time point.

The attacked destination group analysis unit 81 calculates a correlation coefficient of an access time point (detection time point) and the number of log-in trials (number of attacks) from a certain transmission source IP address, for a plurality of communication devices. When the correlation coefficient of the detection time point and the number of attacks is a threshold or higher, the attacked destination group analysis unit 81 identifies the certain transmission source IP address as an attack source IP, and identifies the plurality of communication devices as an attacked destination group.

In the example illustrated in FIG. 6, for example, at a detection time point "0:01, Oct 1", 50 log-in trials are recorded to each of the IP addresses $V_1$, $V_2$, and $V_3$, from the IP address of "$H_1$", where "i" is a positive integer in the IP address $H_i$. As described above, the attacked destination group analysis unit 81 identifies that the plurality of IP addresses ($V_1$, $V_2$, and $V_3$) to which log-in trial from a certain IP address that has been determined by approximately the same number of times, at approximately the same time point, as IP addresses of the attacked destination group. In addition, the attacked destination group analysis unit 81 identifies the IP address ($H_1$) that has tried the log-in, as the attack source IP.

In the example illustrated in FIG. 6, the attacked destination group analysis unit 81 identifies the IP addresses $H_1$, $H_2$, and $H_3$, as attack source IPs, by the above-described processing. On the other hand, at the detection time point of an IP address $H_4$, record of the number of log-in trials (number of attacks) for the IP addresses $V_2$ and $V_3$ is not performed. Therefore, the IP address $H_4$ is not identified as the attack source IP.

When it is assumed that the IP addresses $V_1$, $V_2$, and $V_3$ are respectively the IP addresses of the servers 2A, 2B, and 2C, the attacked destination group analysis unit 81 may identify the attack source IP for the servers 2A, 2B, and 2C that are in the attacked destination group.

The attack source analysis unit (analysis unit) 82 of the analysis device 8 obtains information on an IDS log, from the IDS log DB 72, and obtains information on the attacked destination group, from the attacked destination group analysis unit 81. The attack source analysis unit 82 identifies a record that includes an IP address (Victim) of each of the attacked destinations, from the IDS log, and identifies an IP address of an attack destination (Hacker) in the identified record, as the attack source IP.

The attack source information transmission unit 83 as a transmission unit executes processing of transmitting attack source information that includes the attack source IP, to the IP addresses of the attacked destination group. That is, the attack source information transmission unit 83 generates a packet that includes the attack source information. At that time, the IP address of the attacked destination is set as the packet destination IP address of the packet.

The communication IF 14 of the information processing device 10 that operates as the management device 6 transmits the packet to the attacked destination (server 2). Therefore, the attack source information (attack source IP) is received at each of the servers 2A, 2B, and 2C that are included in the attacked destination group.

The transmission of the attack source information may be started using acquisition of the attack source information as a trigger. Alternatively, the attack source information is stored in a certain storage area of the auxiliary storage device 13 or the memory 12, and the attack source information transmission unit 83 may execute transmission processing of the attack source information in response to a request from the verification device 9.

<<Server>>

As illustrated in FIG. 4, the verification device 9 that is provided in the server 2 includes an access log verification unit (verification unit) 91, an access log DB 92, a stolen user name list (list) 93, and an interface unit 94. The CPU 11 of the information processing device 10 that operates as the server 2 operates as the access log verification unit 91 by executing a program. The server 2 is an example of "communication device", and the verification device 9 is an example of "information processing device".

The access log DB 92 and the stolen user name list 93 are stored in the auxiliary storage device 13 or the memory 12 of the information processing device 10 that operates as the server 2. An output device (display device) that is included in the input/output device 15 of the server 2 operates as the interface unit 94.

The CPU 11 of the information processing device 10 that operates as the server 2 operates as a provision system of a Web service by executing a program that is stored in the auxiliary storage device 13. That is, the server 2 operates as a Web server that provides information on a Web page for the terminal 3 of an end user that is a Web client. A program and data that are used to operate the server 2 as the Web server are stored in the auxiliary storage device 13 in advance.

The CPU 11 receives a log-in request to the Web site, which has been transmitted from the terminal 3 of the end user to the server 2, through the communication IF 14. After that, the CPU 11 reads information on a Web page of a log-in screen, from the auxiliary storage device 13, and transmits the information to the terminal 3. The information on the Web page is stored in the auxiliary storage device 13 in advance.

The end user who uses the terminal 3 inputs authentication information, that is, an end user name and a password, using the log-in screen, where the authentication information is also referred to as an authentication code. The authentication information is received at the communication IF 14 of the server 2 from the terminal 3, and transmitted to the CPU 11.

The CPU 11 determines whether or not the authentication information is authorized, using authentication information that is stored in the auxiliary storage device 13 in advance. When the authentication information is authorized, the CPU 11 determines "OK (Yes)" of the log-in, and executes processing of transmitting information on the next Web page, to the terminal 3. On the other hand, when the authentication information is unauthorized, the CPU 11 determines "NG (No)" of the log-in, and executes processing of transmitting an error message, to the terminal 3.

As the case in which the authentication information is unauthorized, for example, there are a case in which the end user name is not registered as authentication information, and a case in which the password is not matched with a password that has been registered as authentication information.

The CPU 11 stores a record that includes success or failure of the authentication (that is, success or failure of the log-in), in the access log DB 92. At that time, as an information element (parameter) that is included in the record, at least, an IP address of a communication device that is a transmission source of a log-in request, authentication information (end user name and password), and information that indicates success or failure of the log-in are included.

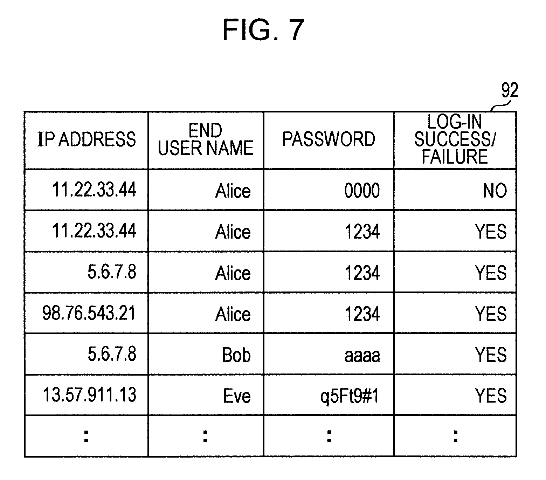

FIG. 7 is a diagram illustrating a data structure example of the access log DB 92. As described above, the access log DB 92 stores one or more records each of which includes an IP address of a log-in request source, an end user name, a password, and information that indicates success/failure (Yes/No) of the log-in. The IP address of the log-in request source is an example of "information on a log-in request source".

The CPU 11 performs record registration to the access log DB 92 each time when the authentication processing based on a log-in request is executed. In such records (logs) of the access log DB 92, there may be included a log of a result of a log-in request from the terminal 3 of the authenticated end user, and a log of a result of a log-in request from the terminal 5 that is an attack source by a brute force attack.

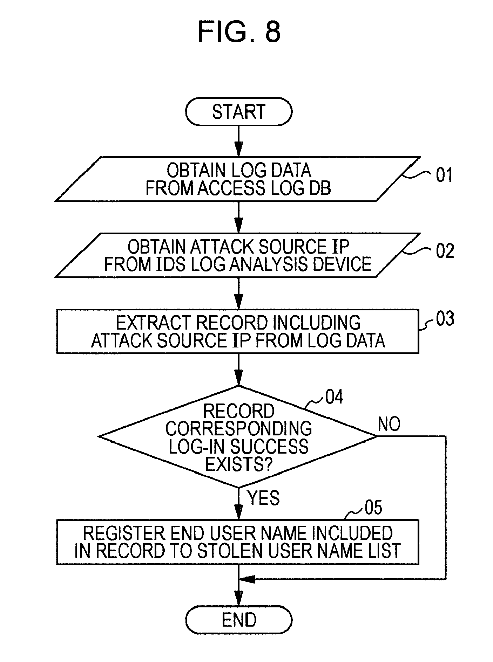

FIG. 8 is a flowchart illustrating an operation (processing) example of the access log verification unit 91 (CPU 11). The processing illustrated in FIG. 8 is executed, for example, periodically or regularly. Alternatively, in the processing illustrated in FIG. 8, reception (arrival) of attack source information is checked periodically or regularly, and the processing may be started when the attack source information arrives. Alternatively, the processing illustrated in FIG. 8 may be started using reception of the attack source information as a trigger.

In FIG. 8, the access log verification unit 91 obtains log data including each record from the access log DB 92 (Step 01). After that, the access log verification unit 91 obtains attack source information such as the attack source IP from the analysis device 8 (Step 02). In the example of FIG. 8, the following case is assumed. That is, the access log verification unit 91 performed by the server 2 transmits a massage of a provision request of attack source information, to the analysis device 8 in the management device 6. The analysis device 8 or the attack source information transmission unit 83 that has received the provision request transmits the attack source information to the server 2 that is the transmission source of the provision request, in response to the provision request.

After that, the access log verification unit 91 extracts records each of which includes an attack source IP, from the log data (Step 03). After that, the access log verification unit 91 determines whether or not a record that includes information that indicates success of the log-in exists in the extracted records (Step 04).

At that time, when the corresponding record does not exist in the extracted records (No in "Step 04"), the processing illustrated in FIG. 8 ends. On the other hand, when the corresponding record exists in the extracted records (Yes in "Step 04"), the access log verification unit 91 registers an end user name that is included in the record, to the stolen user name list 93 (Step 05). After that, the processing illustrated in FIG. 8 ends.

The processing of "Step 01" and the processing of "Step 02" in FIG. 8 may be reversed. In addition, in the example of FIG. 8, when a plurality of attack sources IP are obtained, the processing of "Step 03" and the subsequent processes are executed for the attack sources IP in parallel. However, the processes 03 to 05 are executed repeatedly for each of the attack sources IP.

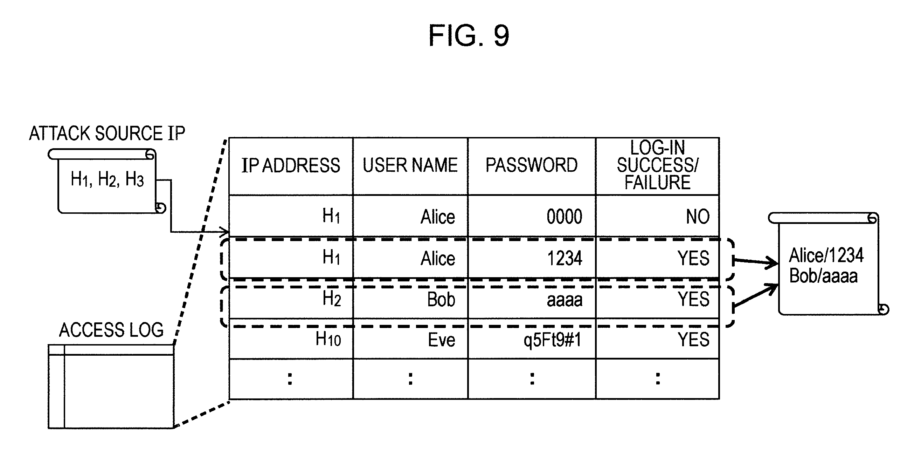

FIG. 9 is a diagram illustrating processing of the access log verification unit 91. In FIG. 9, an example is illustrated in which "$H_1$", "$H_2$", and "$H_3$" are obtained as attack source IPs regarding an access log having a content illustrated in FIG. 9. The access log verification unit 91 extracts records that include the attack sources IP "$H_1$" and "$H_2$". At that time, the second record from the top (hereinafter referred to as "record 2") and the third record from the top (hereinafter referred to as "record 3") are extracted.

The access log verification unit 91 refers to information (status) on "success/failure of the log-in" in each of the records 2 and 3. At that time, each of statuses of the records 2 and 3 indicates "Yes (success of the log-in)". Therefore, the access log verification unit 91 determines that both the pieces of authentication information in the records 2 and 3 have been stolen by an attack source. The authentication information of the record 2 corresponds to an end user name "Alice" and a password "1234", and the authentication information of the record 3 corresponds to an end user name "Bob" and a password "aaaa". The access log verification unit 91 registers the end users names ("Alice" and "Bob") of the record 2 and the record 3 to the stolen user name list 93.

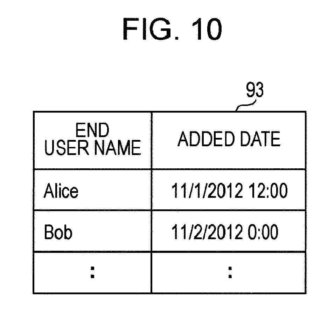

FIG. 10 is a diagram illustrating a data structure example of the stolen user name list 93 which is hereinafter referred to as "list 93". As illustrated in FIG. 10, the list 93 stores one or more records each of which includes the end user name that has been determined to be stolen or estimated to be stolen, the day or the day and time at which each of the records is added to the list 93. In the list 93, a password may be further stored.

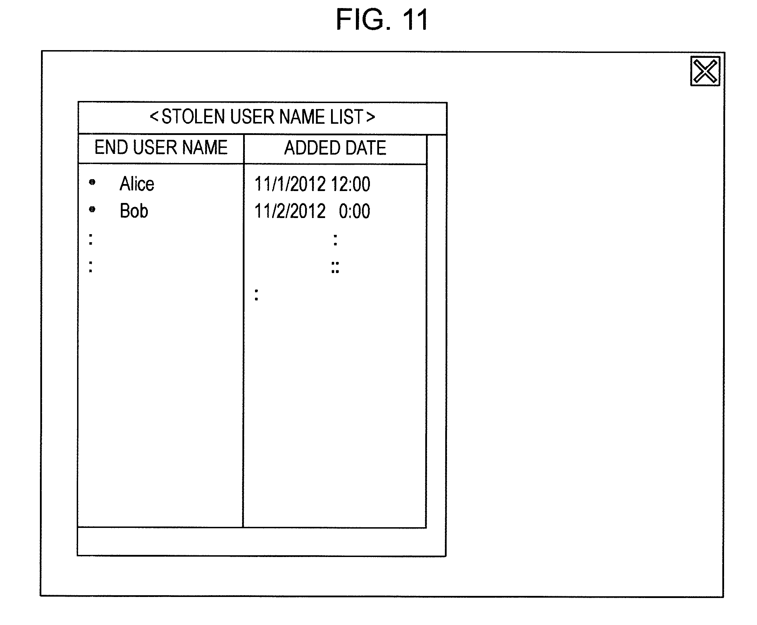

The interface unit 94 displays information on the attacked destination that has been identified by the access log verification unit 91. FIG. 11 illustrates an example of a display screen on which the information output from the interface unit 94 is displayed, where the display device included in the input/output device 15 operates as the interface unit 94. As illustrated in FIG. 11, the interface unit 94 displays a registration content of the stolen user name list 93, on the display screen, as an example. By referring to the display screen, the NW user A who utilizes the server 2, such as the server 2A, may know that the end user names "Alice" and "Bob" have been stolen by the attack source.

As described above, the attack source information (attack source IP) is transmitted to the verification device 9 in each of the servers 2A, 2B, and 2C that are identified as the attacked destination group. Thus, the verification device 9 in each of the servers 2 executes the above-described processing. As a result, in addition to the NW user A, each of the NW user B who utilizes the server 2B and the NW user C who utilizes the server 2C also may know the end user names that have been stolen, by the attack source by referring to the corresponding stolen user name list 93.

For example, the NW user A performs setting change of the system A so that the log-in using the end user names "Alice" or "Bob" is rejected regardless of any password. Such setting change may be performed manually. Alternatively, such setting change may be executed automatically using a certain algorithm (program), for example, when an end user name is added to the stolen user name list 93. Therefore, unauthorized log-in (masquerade) by the attack source may be avoided.

In addition, the NW user A requests the end user having each of "Alice" and "Bob" to change the end user name. Due to the change of the end user name, the masquerade by the attack source is not allowed to be performed. In addition, when rejection of log-in using the stolen end user name is set, an environment may be obtained in which the authenticated end user is allowed to log into the system A, due to the change of the end user name. The change request is sent to the end user through an appropriate method such as an email or by post.

<Operation effect of Embodiments>

In the embodiment, the verification device 9 detects that authentication information (end user name) has been stolen, using an access log and an attack source IP, and registers the detected stolen authentication information to the stolen user name list 93. The NW user may take measures against the theft by referring to the output stolen user name list 93.

When the server 2 (verification device 9) receives the attack source information (attack source IP) that has been obtained by the management device 6 (IDS device 7 and analysis device 8) that is managed by the NW administrator, the server 2 may detect the theft, using an existing access log. Therefore, introduction cost that is desired when the NW user knows theft of authentication information from the access log is reduced.

In addition, in the attack source IP identification method according to the embodiment, an attack source IP may be identified using an IDS log that has been obtained in a relatively short time period. Therefore, there is no disadvantage that an access log in a long time period is desired in order to obtain sufficient data that is used to determine whether or not an IP address in the access log is not authorized, as compared with an existing reputation service.

In addition, in the attack source IP identification method according to the embodiment, in the management device 6, an IP address that performs an attack (log-in trial) by approximately the same number of times against each of an attacked destination group that includes the communication devices (servers 2), at a certain time point, is identified an attack source IP that is to be supplied to the verification device 9. Therefore, even in the attack (log-in trial) that has been performed by the relatively-small number of times, the attack source IP may be identified.

A method or a configuration according to the embodiment may perform to identify easily an IP address of the attack in terms of no need of detection of a large amount of log-in trial failures, as compared with a method or a configuration that determine unauthorized log-in success based on a feature in an access log that there is a record in which log-in is performed successfully once after a large amount of log-in trial failures.

In addition, for example, there is a method in which an IP address and an end user name are associated with each other, and success of log-in with an IP address that is different from the associated IP address usually used is determined as unauthorized log-in. In such a method, it is probable that unauthorized log-in is falsely detected when an end user uses a plurality of terminal 3. In addition, the false detection may occur even when a single end user name is shared between a plurality of people.

In the attack source IP identification method according to the embodiment, a plurality of IP addresses is detected as attack source IPs as long as a condition is satisfied in which an IP address is identified as the attack source IP. Therefore, the above-described disadvantage (false detection) due to the method by the association is not caused. In addition, in the attack source IP identification method according to the embodiment, for brute force attacks using a plurality of IP addresses, each of the attack sources IP may be detected.

<Modifications>

In the embodiment, an attack source IP is identified by the method that is described above with reference to FIG. 6, using the IDS device 7 and the analysis device 8. However, the attack source IP identification method is merely an example. That is, an identification method of an attack source IP (attack source information) that is provided (received) for (at) the verification device 9 is not limited to the method that is described in the embodiments. That is, any attack source IP identification method may be applied, in addition to the attack source IP identification method for a brute force attack using an existing IDS. Therefore, identification of an attacked destination group is not an indispensable condition for identification of an attack source IP, and a method may be applied in which an attack source IP against a single communication device (server) is detected.

In addition, in the embodiment, as attack source information, an IP address is used. Therefore, management that is independent of a communication device that is an attack source may be performed, and the association with an existing access log to which an IP address of a log-in request source (transmission source) is recorded may be performed easily. However, that the attack source information is an IP address is not the indispensable condition, and information other than an IP address may be applied as the attack source information as long as log-in request source information that is matched with the attack source information in the access log is identified. The information on the log-in request source that is recorded to the access log is also not limited to a transmission source IP address.

In addition, in the embodiment, the example is described in which the IDS device 7 and the analysis device 8 operate on the single information processing device 10 (management device 6). However, the IDS device 7 and the analysis device 8 operate on respective information processing devices, and an IDS log that is obtained in the IDS device 7 through the communication between the information processing devices may be transmitted to the analysis device 8.

In addition, in the embodiment, the example is described in which the verification device 9 that is an example of "information processing device" is included in the server 2 that is an example of "communication device". Instead of such a configuration, the verification device 9 may be installed in an information processing device that may communicate with the server 2 and is independent of the server 2. In this case, it is only sufficient to add a configuration in which an access log is supplied to the verification device 9, to the existing server (service provision system), and a modification degree of the server may be caused to be small. In addition, an information processing device that operates as a Web server may be different from an information processing device that stores an access log DB.

## Claims

1. An authentication information theft detection method performed by an information processing device which detects theft of authentication information that is used for log-in by a user, for a communication device that provides a certain service for the user when the log-in is performed successfully, the authentication information theft detection method comprising:

   causing the information processing device to store, for each log-in request, a record that includes information on a log-in request source, authentication information that the log-in request source submits to the communication device when the log-in is performed, and information that indicates a success or failure of the log-in using the authentication information;
   causing the information processing device to receive information on an attack source against the communication device, from a management device of a network in which the communication device exists;
   causing the information processing device to determine that authentication information in the record is stolen by the attack source when information that indicates success of the log-in is stored in the record, the record including information on the log-in request source which is matched with the information on the attack source; and
causing the information processing device to output the authentication information that is determined to be stolen.

2. The authentication information theft detection method according to claim 1, wherein the information processing device receives information on a certain attack source when information is obtained in the management device, the information indicating that the certain attack source performs an attack at a certain time point by an approximately same number of times on an attacked destination group that includes the communication device,.

3. The authentication information theft detection method according to claim 1, wherein the information processing device receives information on a certain attack source from the management device that detects that the communication device is one attacked destination from among an attacked destination group in which each correlation coefficient of an attack detection time point and a number of attacks from the certain attack source is a threshold or higher.

4. The authentication information theft detection method according to claim 1, wherein each of the information on the attack source and the information on the log-in request source is an IP address.

5. The authentication information theft detection method according to claim 1, wherein the authentication information includes a user identifier.

6. An authentication information theft detection device that detects theft of authentication information that is used for log-in by a user, for a communication device that provides a certain service for the user when the log-in is performed successfully, the authentication information theft detection device comprising:

   a storage device that stores, for each log-in request, a record that includes information on a log-in request source, authentication information that the log-in request source submits to the communication device when the log-in is performed, and information that indicates a success or failure of the log-in using the authentication information;
   a reception device that receives information on an attack source against the communication device, from a management device of a network in which the communication device exists;
a determination unit that determines that authentication information in a record that includes information on the log-in request source, which is matched with the information on the attack source, is stolen by the attack source when information that indicates success of the log-in is stored in the record; and
an output device that outputs the authentication information that is determined to be stolen.

7. A program for causing a computer to execute a process for detecting theft of authentication information that is used for log-in by a user, for a communication device that provides a certain service for the user when the log-in is performed successfully, the program comprising:

storing, for each log-in request, a record that includes information on a log-in request source, authentication information that the log-in request source submits to the communication device when the log-in is performed, and information that indicates success or failure of the log-in using the authentication information;
receiving information on an attack source against the communication device, from a management device of a network in which the communication device exists;
determining that authentication information in a record that includes information on the log-in request source, which is matched with the information on the attack source, is stolen by the attack source when information that indicates success of the log-in is stored in the record; and
outputting of the authentication information that is determined to be stolen.

# FIG. 1

NW USER C (ORGANIZATION)

ACCESS LOG OF
SYSTEM C

4

EXTERNAL NW

5

1

2, 2C   NETWORK

6

3

3

3

2, 2A

NW USER A (COMPANY)

ACCESS LOG OF
SYSTEM A
• IP ADDRESS
• END USER NAME
• PASSWORD
• SUCCESS/FAILURE
  (YES/NO) OF LOG-IN

3   3   3

2, 2B

3   3   3

NW USER B
(UNIVERSITY)

ACCESS LOG OF
SYSTEM B

EP 2 950 228 A1

# FIG. 2

MANAGEMENT DEVICE
(NW ADMINISTRATOR) ~6

IDS DEVICE ~7

IDS LOG

OUTPUT ATTACK
SOURCE IP  ~<1>  ~8

IDS LOG
ANALYSIS DEVICE

SERVER (NW USER) 2, 2A

ACCESS LOG VERIFICATION DEVICE 9

LOG-IN BY
ATTACK SOURCE HAS
BEEN PERFORMED
SUCCESSFULLY?  <2>

YES  <3>

DETERMINE END USER NAME
AS "STOLEN USER NAME"

OUTPUT STOLEN USER NAME  <4>

NW USER A

ACCESS LOG
• IP ADDRESS
• END USER NAME
• PASSWORD
• SUCCESS/FAILURE
(YES/NO) OF LOG-IN

EP 2 950 228 A1

# FIG. 3

10

**INFORMATION PROCESSING DEVICE**

B

11 — CPU

12 — MEMORY

15 — INPUT/OUTPUT DEVICE

AUXILIARY STORAGE DEVICE — 13

COMMUNICATION IF — 14

14

# FIG. 4

MANAGEMENT DEVICE — 6

IDS DEVICE — 7
ATTACK DETECTION UNIT — 71
IDS LOG DB — 72

IDS LOG ANALYSIS DEVICE — 8
ATTACKED DESTINATION GROUP ANALYSIS UNIT — 81
ATTACK SOURCE ANALYSIS UNIT — 82
ATTACK SOURCE INFORMATION TRANSMISSION UNIT — 83

SERVER — 2, 2A — 9
ACCESS LOG VERIFICATION DEVICE
ACCESS LOG VERIFICATION UNIT — 91
ACCESS LOG DB — 92
STOLEN USER NAME LIST — 93
INTERFACE UNIT — 94
NW USER A

SERVER — 2, 2B — 9
ACCESS LOG VERIFICATION DEVICE
ACCESS LOG VERIFICATION UNIT — 91
ACCESS LOG DB — 92
STOLEN USER NAME LIST — 93
INTERFACE UNIT — 94
NW USER B

SERVER — 2, 2C — 9
ACCESS LOG VERIFICATION DEVICE
ACCESS LOG VERIFICATION UNIT — 91
ACCESS LOG DB — 92
STOLEN USER NAME LIST — 93
INTERFACE UNIT — 94
NW USER C

EP 2 950 228 A1

# FIG. 5

72

| HACKER | VICTIM | DETECTION TIME | NUMBER OF ATTACKS | PORT |
|--------|--------|----------------|-------------------|------|
| 11.22.33.44 | 55.66.77.88 | 4/1/2013 0:00 | 30 | 22 |
| 11.22.33.45 | 55.66.77.88 | 4/2/2013 0:01 | 100 | 3389 |
| : | : | : | : | : |

## FIG. 6

| ATTACK SOURCE | DETECTION TIME | ATTACKED DESTINATION | | |
|---|---|---|---|---|
| | | $V_1$ | $V_2$ | $V_3$ |
| $H_1$ | 10/1 0:01 | 50 | 50 | 50 |
| ⋮ | ⋮ | | | |
| $H_2$ | 10/1 4:00 | 12 | 12 | 12 |
| $H_2$ | 10/1 4:01 | 10 | 9 | 9 |
| $H_3$ | 10/1 4:03 | 30 | 30 | 30 |
| ⋮ | ⋮ | | | |
| $H_4$ | 10/1 11:59 | 30 | 0 | 0 |

ATTACKED DESTINATION IP GROUP

ATTACK SOURCE IP

$H_1, H_2, H_3$

IDS LOG

EP 2 950 228 A1

# FIG. 7

92

| IP ADDRESS | END USER NAME | PASSWORD | LOG-IN SUCCESS/ FAILURE |
|---|---|---|---|
| 11.22.33.44 | Alice | 0000 | NO |
| 11.22.33.44 | Alice | 1234 | YES |
| 5.6.7.8 | Alice | 1234 | YES |
| 98.76.543.21 | Alice | 1234 | YES |
| 5.6.7.8 | Bob | aaaa | YES |
| 13.57.911.13 | Eve | q5Ft9#1 | YES |
| ⋮ | ⋮ | ⋮ | ⋮ |

# FIG. 8

START

OBTAIN LOG DATA
FROM ACCESS LOG DB    01

OBTAIN ATTACK SOURCE IP
FROM IDS LOG ANALYSIS DEVICE    02

EXTRACT RECORD INCLUDING
ATTACK SOURCE IP FROM LOG DATA    03

RECORD
CORRESPONDING
LOG-IN SUCCESS
EXISTS?    04

NO

YES

REGISTER END USER NAME INCLUDED
IN RECORD TO STOLEN USER NAME LIST    05

END

# FIG. 9

ATTACK SOURCE IP

H₁, H₂, H₃

ACCESS LOG

| IP ADDRESS | USER NAME | PASSWORD | LOG-IN SUCCESS/ FAILURE |
|------------|-----------|----------|-------------------------|
| H₁ | Alice | 0000 | NO |
| H₁ | Alice | 1234 | YES |
| H₂ | Bob | aaaa | YES |
| H₁₀ | Eve | q5Ft9#1 | YES |
| : | : | : | : |

Alice/1234
Bob/aaaa

EP 2 950 228 A1

# FIG. 10

93

| END USER NAME | ADDED DATE |
|---|---|
| Alice | 11/1/2012 12:00 |
| Bob | 11/2/2012 0:00 |
| ⋮ | ⋮ |

# FIG. 11

| < STOLEN USER NAME LIST > | |
|---|---|
| END USER NAME | ADDED DATE |
| • Alice | 11/1/2012 12:00 |
| • Bob | 11/2/2012  0:00 |
| ⋮ | ⋮ |
| ⋮ | ⋮ |
| | ⋮ |

EP 2 950 228 A1

**Europäisches Patentamt**
**European Patent Office**
**Office européen des brevets**

# EUROPEAN SEARCH REPORT

Application Number

EP 15 16 8361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 695 097 B1 (MATHES CHRIS [US] ET AL) 8 April 2014 (2014-04-08) * column 2, line 5 - column 2, line 50 * * column 3, line 37 - column 4, line 35 * * column 5, line 5 - column 6, line 5 * * column 7, line 35 - column 8, line 17 * * figures 1, 2 * | 1-7 | INV. G06F21/55 H04L29/06 |
| A | US 2007/005984 A1 (FLORENCIO DINEI A [US] ET AL) 4 January 2007 (2007-01-04) * paragraphs [0007], [0008], [0017], [0036], [0038], [0042], [0052] * * figures 1, 2 * | 1-7 | |
| A | US 2005/091513 A1 (MITOMO MASASHI [JP] ET AL) 28 April 2005 (2005-04-28) * paragraphs [0002], [0069], [0083] - [0093], [0116], [0179], [0187], [0188] * * figures 2, 5, 17 * | 1-7 | |

TECHNICAL FIELDS
SEARCHED      (IPC)

G06F
H04L

The present search report has been drawn up for all claims

| Place of search | Date of completion of the search | Examiner |
|---|---|---|
| Munich | 9 September 2015 | Volpato, Gian Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 16 8361

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2015

| Patent document cited in search report | | Publication date | Patent family member(s) | | Publication date |
|---|---|---|---|---|---|
| US 8695097 | B1 | 08-04-2014 | NONE | | |
| US 2007005984 | A1 | 04-01-2007 | US | 2007005984 A1 | 04-01-2007 |
| | | | US | 2007006305 A1 | 04-01-2007 |
| US 2005091513 | A1 | 28-04-2005 | JP | 3999188 B2 | 31-10-2007 |
| | | | JP | 2005136526 A | 26-05-2005 |
| | | | US | 2005091513 A1 | 28-04-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008227931 A
- JP 2004220373 A
- JP 2010239392 A

- JP 2005234729 A
- JP 2005332152 A
- JP 2012212354 A